# EUROPÄISCHE PATENTANMELDUNG

(11) **EP 3 929 441 A1**
(43) Veröffentlichungstag der Anmeldung: **29.12.2021**
(21) Anmeldenummer: 21181718.4
(22) Anmeldetag: 25.06.2021
(51) Int. Cl.: F04C 2/344, F04C 15/00, F04C 19/00, F16J 15/10, F16J 15/54

(54) **PUMPE MIT BEFESTIGTER DICHTUNG**

(30) Priorität: 25.06.2020 DE 102020116731
(71) Anmelder: Schwäbische Hüttenwerke Automotive GmbH, 73433 Aalen (DE)
(72) Erfinder: Welte, Claus, 88326 Aulendorf (DE); Meinig, Uwe, 88348 Bad Saulgau (DE)
(74) Vertreter: SSM Sandmair

(57) **Zusammenfassung**

Pumpe zur Beaufschlagung eines Aggregats, beispielsweise eines Getriebes, mit Fluid, wobei die Pumpe Folgendes umfasst:
1.1 ein Pumpengehäuse (1) mit
- einem Einlass (6) für das Fluid auf einer Niederdruckseite,
- einem Auslass (8) für das Fluid auf einer Hochdruckseite,
- einer Umfangswand (2), die eine Förderkammer (5) der Pumpe umgibt, und
- einer Stirnwand (3) mit einer der Förderkammer (5) axial abgewandten äußeren Stirnfläche, an welcher der Auslass (8) mündet,

1.2 ein in der Förderkammer (5) bewegliches Förderglied zur Förderung des Fluids von der Niederdruckseite zur Hochdruckseite,
1.3 eine Dichtung (S) mit einer Dichtungsschleife (51), die den Auslass (8) zur Abdichtung an der äußeren Stirnfläche der Stirnwand (3) umgibt,
1.4 ein weibliches Fügeelement (13; 23; 33; 43) mit einem axial erstreckten Hohlraum (14; 24; 34; 44), und
1.5 ein männliches Fügeelement (15; 25; 35; 45), das eines aus Pumpengehäuse (1) und Dichtung (S) durchragt oder von einem aus Pumpengehäuse (1) und Dichtung (S) vorragt,
1.6 wobei das männliche Fügeelement (15; 25; 35; 45) im Hohlraum (14; 24; 34; 44) mit dem weiblichen Fügeelement (13; 23; 33; 43) in einem axial auf Zug belastbaren Fügeeingriff ist, und
1.7 wobei die Dichtung (S) an einer vom Pumpengehäuse (1) axial abgewandten Rückseite axialen Kontakt mit einem der Fügeelemente (13, 15; 43, 45) hat und dadurch am Pumpengehäuse (1) gehalten wird und/oder
1.8 das weibliche Fügelement (23; 33; 43) auf das männliche Fügeelement (25; 35; 45) geschraubt oder gesteckt ist.

## Beschreibung

Die Erfindung betrifft die Anordnung einer Dichtung an einer Pumpe. Insbesondere betrifft die Erfindung die Art, wie die Dichtung an einem Gehäuse der Pumpe gehalten wird. Ferner betrifft die Erfindung eine vormontierte Pumpen- bzw. Montageeinheit. Die Pumpe kann als Getriebepumpe zur Versorgung eines Getriebes, beispielsweise eines Automatikgetriebes oder Lenkgetriebes eines Fahrzeugs oder eines Getriebes einer Windkraftanlage, mit Druckfluid verwendet werden. In einer anderen Verwendung kann sie als Schmierölpumpe und/oder Kühlmittelpumpe zur Versorgung einer Brennkraftmaschine und/oder eines Elektromotors, beispielsweise eines Antriebsmotors eines Fahrzeugs, mit Schmieröl und/oder Kühlmittel verwendet werden. Eine kombinierte Verwendung als Schmieröl- und/oder Kühlmittelpumpe und zusätzlich als Getriebepumpe ist ebenfalls denkbar, insbesondere in Ausführungen, in denen die Pumpe mehrflutig ist. Denkbar ist auch die Ausführung als Vakuumpumpe. Die Pumpe kann einflutig oder mehrflutig, insbesondere mehrkreisig sein. Die Pumpe kann vorteilhafterweise in Cartridge-Bauweise ausgeführt sein.

Aus dem Stand der Technik sind Pumpen in Cartridge-Bauweise bekannt, welche als Montageeinheit in einen Aufnahmeschacht, beispielsweise eines Getriebes, eingeführt werden können. Dichtungen werden bei den bekannten Pumpen teils lose bei der Montage in den Aufnahmeschacht eingelegt oder im Vorfeld mit dem Pumpengehäuse durch Presspassungen oder durch zusätzliche Sicherungselemente verklemmt am Pumpengehäuse gehalten. Bei der Montage der Dichtung werden häufig Abrieb generiert und/oder andere Schmutzpartikel eingebracht, welche entweder durch aufwendige Reinigung entfernt werden müssen oder der Pumpe oder dem zu versorgenden Aggregat im Betrieb Schaden zufügen können.

Auch bei der Demontage der Dichtung, beispielsweise zum Zweck der Reparatur einzelner Pumpenteile, können Abrieb- und sonstige Schmutzpartikel entstehen bzw. eingebracht werden, welche wiederum im Nachgang gründlich entfernt werden müssen.

Es ist daher eine Aufgabe der Erfindung, eine Pumpe zu schaffen, die als vormontierte Pumpen- bzw. Montageeinheit kostengünstig montiert und demontiert werden kann.

Die Aufgabe wird durch eine Pumpe nach Anspruch 1 gelöst.

Eine Pumpe, wie sie die Erfindung betrifft, umfasst ein Pumpengehäuse mit einer von einer Umfangswand umgebenen Förderkammer mit einem Einlass für das Fluid auf einer Niederdruckseite, mindestens einem Auslass für das Fluid auf einer Hochdruckseite und einem in der Förderkammer beweglichen Förderglied zur Förderung des Fluids von der Niederdruckseite zur Hochdruckseite. Das Förderglied wird vorzugsweise durch einen drehbeweglichen Förderrotor, beispielsweise durch einen Rotor einer Flügelzellenpumpe mit wenigstens einem Flügel, gebildet.

Die Förderkammer wird in Axialrichtung von einer Stirnwand begrenzt. An einer von der Förderkammer abgewandten äußeren Stirnseite der Stirnwand mündet mindestens ein Druckauslass für aus der Förderkammer gefördertes Druckfluid. Die Pumpe umfasst eine Dichtung, die zur Abdichtung des Druckauslasses an der äußeren Stirnfläche der Stirnwand vorgesehen ist. Die Dichtung weist eine Dichtungsschleife auf, die den Auslass an der äußeren Stirnfläche der Stirnwand umgibt. Die Dichtung ist vorzugsweise als eine Axialdichtung ausgebildet.

Das Pumpengehäuse umfasst die Umfangswand und die Stirnwand als eine erste Stirnwand, welche als separate Bauteile gefertigt sein können oder in einem Stück gefertigt zusammen einen Gehäusetopf bilden können. Des Weiteren umfasst das Pumpengehäuse eine an der von der ersten Stirnwand abgewandten axialen Stirnseite der Umfangswand angeordnete weitere, zweite Stirnwand. In bevorzugten Ausführungen werden die Umfangswand, die erste Stirnwand und die zweite Stirnwand separat gefertigt und axial in losem Druckkontakt gegeneinander gedrückt.

Die Dichtung wird mittels eines Fügeeingriffs in einem vormontierten Zustand der Pumpe an dem Pumpengehäuse gehalten. Zu diesem Zweck umfasst die Pumpe ein weibliches Fügeelement mit einem axial erstreckten Hohlraum und ein männliches Fügeelement, welche in einen axial auf Zug belastbaren Fügeeingriff gebracht werden können. Zur Herstellung des Fügeeingriffs wird eines der Fügeelemente relativ zum Pumpengehäuse und/oder relativ zur Dichtung in Kontakt mit dem anderen Fügeelement gebracht. Der Fügeeingriff beruht auf Form- und/oder Reibschluss. Ein Stoffschluss soll nicht ausgeschlossen werden, bevorzugt beinhaltet der Fügeeingriff jedoch keinen Stoffschluss. Das Pumpengehäuse und die Dichtung bilden in vorteilhaften Ausführungen eine vormontierte Pumpeneinheit, d. h. eine Montageeinheit. In derartigen Ausführungen umfasst die Pumpe eine Halteeinrichtung mit einem oder mehreren Haltern, der oder die den Zusammenhalt der vormontierten Komponenten der Pumpe gewährleistet oder gemeinsam gewährleisten. Vorzugsweise bildet einer oder bilden mehrere oder jeder der Halter jeweils eines der Fügeelemente pro Fügeeingriff. Die vormontierte Montageeinheit umfasst die Umfangswand, die Stirnwand, optional die weitere, zweite Stirnwand des Pumpengehäuses, das im Pumpengehäuse angeordnete Förderglied und auch die im Fügeeingriff der Fügeelemente am Pumpengehäuse gehaltene Dichtung. Vorzugsweise ist die Halteeinrichtung Bestandteil des Pumpengehäuses.

Das männliche Fügeelement und das weibliche Fügeelement können als von der Dichtung und/oder dem Pumpengehäuse separate Bauteile ausgebildet sein. Alternativ kann das männliche Fügeelement und/oder das weibliche Fügeelement von der Dichtung und/oder dem Pumpengehäuse, beispielsweise von einem Halter der Halteeinrichtung oder einer Stirnwand, ausgebildet sein. So kann beispielsweise eines der Fügeelemente von der Dichtung oder dem Pumpengehäuse ausgebildet sein, während das andere Fügeelement als separates Bauteil ausgebildet ist. Für den Fall, dass eines der Fügeelemente Bestandteil der Dichtung und/oder des Pumpengehäuses ist, ist das Fügeelement bevorzugt an einem radial äußeren Rand der Dichtung und/oder der Stirnwand des Pumpengehäuses ausgebildet.

Die Dichtung hat vorzugsweise an einer vom Pumpengehäuse axial abgewandten Rückseite axialen Kontakt mit einem der Fügeelemente und wird dadurch am Pumpengehäuse gehalten. Bevorzugt drückt eines der Fügeelemente durch axialen Kontakt mit einer dem Pumpengehäuse axial abgewandten Rückseite der Dichtung die Dichtung in axialer Richtung gegen das Pumpengehäuse.

Vorzugsweise weist die Dichtung einen Durchgang auf, durch welchen eines der Fügeelemente, vorzugsweise das männliche Fügeelement, axial durchragen kann. Der Durchgang kann an einem radial äußeren Rand der Dichtung oder an wenigstens einer Lasche, welche an einem Außenumfang der Dichtung radial nach außen vorragt, ausgebildet sein. Vorzugsweise überlappt die Lasche in axialer Sicht auf die Stirnwand eine Andrückeinrichtung, die nachfolgend noch beschrieben wird. Bevorzugt weist die Dichtung mehrere in axialer Sicht auf die Dichtung nach außen vorragende Laschen, beispielsweise zwei radial gegenüberliegende Laschen, mit jeweils einem Durchgang für ein Fügeelement oder mit einem in der jeweiligen Lasche geformten oder mit der jeweiligen Lasche fest gefügten Fügelement auf.

Vorteilhafterweise ist die axiale Erstreckung des Hohlraums des weiblichen Fügeelements größer als die weiteste radiale Erstreckung des Hohlraums. Vorzugsweise erstreckt sich der Hohlraum in axialer Richtung mehr als doppelt so weit wie in radialer Richtung. In vorteilhaften Ausführungen erstreckt sich der Hohlraum des weiblichen Fügeelements in axialer Richtung weiter als die mittlere Dicke der Dichtung, wobei unter der mittleren Dicke der Dichtung das arithmetische Mittel über die gegebenenfalls unterschiedliche axiale Erstreckung der Dichtung über ihre gesamte Fläche zu verstehen ist.

Ist das weibliche Fügeelement Bestandteil des Pumpengehäuses, beispielsweise als Vertiefung in der Stirnwand oder, wie bevorzugt, als Vertiefung in einem die Stirnwand durchragenden Halter geformt, erstreckt sich der Hohlraum bevorzugt bis zu einer der Dichtung axial zugewandten Öffnung und ist von der Öffnung abgesehen geschlossen. Vorzugsweise gilt, dass der Hohlraum des weiblichen Fügeelements an einem ersten axialen Ende eine Öffnung und an einem zweiten axialen Ende einen Boden aufweist. Ein Schnitt durch den Hohlraum des weiblichen Fügeelements oder einen Teil des Hohlraums quer zu dessen axialer Richtung ist vorzugsweise kreisförmig, insbesondere im Wesentlichen kreisförmige, kann aber auch beispielsweise elliptisch oder rechteckig sein. Unter dem Ausdruck "im Wesentlichen kreisförmig" im Sinne der vorliegenden Anmeldung sollen insbesondere auch Querschnitte verstanden werden, welche einen kreisförmigen Kern aufweisen, wie sie beispielsweise bei einer Keilverzahnung oder einem Gewinde vorkommen.

Vorzugsweise weist der Hohlraum des weiblichen Fügeelements entlang seiner axialen Erstreckung einen im Wesentlichen gleichbleibenden Querschnitt auf. Durch den Ausdruck "im Wesentlichen gleichbleibend" sollen insbesondere auch Querschnitte eines Gewindes mitberücksichtigt werden, welche über ihre axiale Länge in Abhängigkeit von der Schnittebene voneinander abweichen können. In alternativen Ausführungen kann sich der Querschnitt des Hohlraums entlang seiner axialen Erstreckung ändern, beispielsweise in Form und/oder Größe. Besonders bevorzugt wird der Hohlraum des weiblichen Fügeelements durch eine Sacklochbohrung, insbesondere durch eine kreisförmige Sacklochbohrung, gebildet.

Das männliche Fügeelement durchragt eines aus Pumpengehäuse und Dichtung und/oder ragt von einem aus Pumpengehäuse und Dichtung vor. In bevorzugten Ausführungen durchragt das männliche Fügeelement die Dichtung in axialer Richtung. Besonders bevorzugt durchragt das männliche Fügeelement die Dichtung in axialer Richtung der ersten Stirnwand entgegen. Das männliche Fügeelement weist vorzugsweise seine weiteste Erstreckung in axialer Richtung auf. D. h. das männliche Fügeelement erstreckt sich in axialer Richtung weiter als in radialer Richtung.

Ein Schnitt durch das männliche Fügeelement oder einen Teil des männlichen Fügeelements quer zur Axialrichtung des männlichen Fügeelements weist vorzugsweise eine im Wesentlichen kreisförmige Querschnittsfläche auf, kann aber beispielsweise auch elliptisch, ringförmig oder rechteckig sein. Besonders bevorzugt weist das männliche Fügeelement einen zu dem Querschnitt des Hohlraums des weiblichen Fügeelements komplementären Querschnitt auf.

Vorzugsweise weist das männliche Fügeelement entlang seiner axialen Erstreckung einen veränderlichen Querschnitt auf, insbesondere kann sich der Querschnitt zwischen einem ersten Teil des männlichen Fügeelements und einem zweiten Teil des männlichen Fügeelements in Form und/oder Größe, insbesondere stufenförmig, ändern. Alternativ kann das männliche Fügeelement entlang seiner axialen Erstreckung einen gleichbleibenden Querschnitt aufweisen. In bevorzugten Ausführungen weist das männliche Fügeelement einen Schaft und einen Kopf auf.

Das männliche Fügeelement kann über den Hohlraum des weiblichen Fügeelements mit dem weiblichen Fügeelement in einem axial auf Zug belastbaren Fügeeingriff gebracht werden. Mit anderen Worten das männliche Fügeelement ragt zumindest teilweise, insbesondere mit seinem Schaft, in den Hohlraum des weiblichen Fügeelements und bildet mit dem weiblichen Fügeelement einen axial auf Zug belastbaren Fügeeingriff. Der Fügeeingriff kann formschlüssig und/oder kraftschlüssig ausgebildet sein. Der Fügeeingriff ist vorteilhafterweise wieder lösbar ausgestaltet. In besonders bevorzugten Ausführungen lässt sich der Fügeeingriff zwischen dem weiblichen Fügeelement und dem männlichen Fügeelement zerstörungsfrei lösen.

Vorzugsweise durchragt ein Teil eines Fügeelements den Durchgang der Dichtung und bildet mit einem anderen Teil mit der dem Pumpengehäuse abgewandten Rückseite der Dichtung einen axialen Kontakt. Besonders bevorzugt durchragt das männliche Fügeelement mit seinem Schaft die Dichtung und drückt mit seinem Kopf axial gegen die Dichtung.

Vorzugsweise verschließt das männliche Fügeelement den Hohlraum des weiblichen Fügeelements bzw. dessen Öffnung im Fügeeingriff. Das Verschließen des Hohlraums des weiblichen Fügeelements durch das männliche Fügeelement sorgt dafür, dass der durch die Relativbewegung zwischen dem weiblichen Fügeelement und dem männlichen Fügeelement bei der Montage entstehender Abrieb in den Hohlraum hineingedrückt und in diesem eingeschlossen wird.

Das männliche Fügeelement verschließt den Hohlraum des weiblichen Fügeelements im Fügeeingriff vorzugsweise, indem es zumindest teilweise in den Hohlraum hineinragt. Das männliche Fügeelement oder ein Teil des männlichen Fügeelements kann den Hohlraum des weiblichen Fügeelements in axialer Richtung gänzlich oder teilweise durchmessen. D. h. das männliche Fügeelement oder ein Teil des männlichen Fügeelements ragt von der Öffnung des Hohlraums des weiblichen Fügeelements bis zu dem der Öffnung gegenüberliegenden Ende des Hohlraums oder ragt von der Öffnung des Hohlraums in Richtung des der Öffnung gegenüberliegenden Endes, ohne dieses zu erreichen.

In bevorzugten Ausführungen weist das männliche Fügeelement einen Schaft und einen Kopf auf, wobei der Schaft einen Durchgang der Dichtung axial durchragt und in den Hohlraum des weiblichen Fügeelements ragt. Der Kopf des männlichen Fügeelements ist dabei mit der vom Pumpengehäuse axial abgewandten Rückseite der Dichtung in Kontakt und drückt die Dichtung gegen das Pumpengehäuse.

Das männliche Fügeelement kann mit dem weiblichen Fügeelement beispielsweise mittels einer Pressverbindung oder Druckverbindung den Fügeeingriff bilden. Im Falle einer Pressverbindung oder Druckverbindung weist das männliche Fügeelement gegenüber dem Hohlraum des weiblichen Fügeelements ein Übermaß auf, d. h. das männliche Fügeelement wird in den Hohlraum des weiblichen Fügeelements eingepresst oder gedrückt.

Das weibliche Fügeelement kann dabei auf das männliche Fügeelement gesteckt bzw. gedrückt werden oder das männliche Fügeelement wird in das weibliche Fügeelement gesteckt bzw. gedrückt. Zur Herstellung des Fügeeingriffs wird das weibliche Fügeelement oder das männliche Fügeelement in Richtung des jeweils anderen Fügeelements bewegt.

Vorzugsweise bilden das männliche Fügeelement und das weibliche Fügeelement einen Schraubeneingriff. Zu diesem Zweck weist das männliche Fügeelement, insbesondere der Schaft des männlichen Fügeelements, ein Außengewinde und der Hohlraum des weiblichen Fügeelements ein entsprechendes Innengewinde auf. Im Falle einer Schraubenverbindung weisen das männliche Fügeelement und das weibliche Fügeelement vorzugsweise ein metrisches Gewinde auf. Insbesondere handelt es sich bei dem Gewinde um ein metrisches Gewinde kleiner M5.

In bevorzugten Ausführungen ist eines der Fügeelemente, vorzugsweise das weibliche Fügeelement, in oder an einer Stirnwand, vorzugsweise der ersten Stirnwand, geformt oder eingesetzt oder ragt vorzugsweise mit axialem Gleitkontakt in die Stirnwand oder durchragt diese.

Beispielsweise kann das weibliche Fügeelement bzw. dessen Hohlraum in Form einer Bohrung, insbesondere Sacklochbohrung, in dem Halter oder in der Stirnwand, insbesondere der ersten Stirnwand, eingebracht sein. In einer bevorzugten Ausführung ragt das weibliche Fügeelement mit axialem Gleitkontakt in die Stirnwand, insbesondere in eine Ausnehmung der Stirnwand, und schließt mit dieser, vorzugsweise bündig, auf der dem Pumpengehäuse abgewandten Rückseite ab.

Das männliche Fügeelement kann beispielsweise eine Schraube, ein Blindniet, Gewindestift oder ein Pressbolzen bzw. Pressstift sein. Vorzugsweise handelt es sich bei dem männlichen Fügeelement um ein Normteil. Das männliche Fügeelement kann beispielsweise durch einen Gewindestift mit Außengewinde, vorzugsweise nach DIN EN ISO 4026, DIN EN ISO 4027, DIN EN ISO 4028 oder DIN EN ISO 4029 in der zum Tag der Anmeldung gültigen Fassung, gebildet sein.

Das weibliche Fügeelement kann indes beispielsweise durch eine Bohrung, insbesondere Sacklochbohrung, eine Mutter, insbesondere Hutmutter, oder einen Stift mit Innengewinde gebildet sein. Vorzugsweise handelt es sich bei dem weiblichen Fügeelement um ein Normteil. Vorzugsweise werden das männliche Fügeelement und das weibliche Fügeelement durch Normteile gebildet. Das weibliche Fügeelement kann beispielsweise durch eine Mutter, insbesondere durch eine Hutmutter, oder durch eine Normstift mit Innengewinde, vorzugsweise nach DIN EN ISO 8735 oder DIN EN ISO 8733, gebildet sein.

Bevorzugt ist das weibliche Fügeelement Bestandteil des Pumpengehäuses und positioniert die Umfangswand und die Stirnwand relativ zueinander in Bezug auf die Winkelposition. Der Hohlraum des weiblichen Fügeelements ist dabei an einer der Dichtung zugewandten Stirnseite des weiblichen Fügeelements vorgesehen.

Vorteilhafterweise kann die Umfangswand mit der ersten Stirnwand und/oder der zweiten Stirnwand über eine Halteeinrichtung, insbesondere über wenigstens einen Halter, verbunden werden. Die Stirnwand oder die Stirnwände wird/werden durch die Halteeinrichtung in Bezug auf die Drehwinkelposition relativ zur Umfangswand positioniert und zusammengehalten. Vorzugsweise wird der Halter der Halteeinrichtung durch eines der Fügeelemente, vorzugsweise das weibliche Fügeelement, gebildet. Zu diesem Zweck ragt eines der Fügeelemente, vorzugsweise das weibliche Fügeelement, mit einem stabförmigen Abschnitt in die erste Stirnwand und/oder die zweite Stirnwand oder durchragt diese. Des Weiteren ragt eines der Fügeelemente, vorzugsweise das weibliche Fügeelement, mit einem stabförmigen Abschnitt in die Umfangswand oder durchragt diese.

In besonders bevorzugten Ausführungen ragt eines der Fügeelemente, vorzugsweise das weibliche Fügeelement, von der zweiten Stirnwand vor und durchragt die Umfangswand und die erste Stirnwand. Das weibliche Fügeelement kann dabei zusammen mit der zweiten Stirnwand ausgebildet oder als separates Bauteil fest mit der zweiten Stirnwand verbunden sein. Vorzugsweise wird das weibliche Fügeelement durch einen Normstift mit Innengewinde, vorzugsweise nach DIN EN ISO 8735 oder DIN EN ISO 8733, gebildet.

Das Pumpengehäuse kann mittels einer Montagestruktur an einer am Montageort vorhandenen Aufnahmeeinrichtung montiert werden oder bereits montiert sein. Wenn es heißt, dass die Pumpe "an" einer Aufnahmeeinrichtung montierbar oder montiert ist, so schließt dies auch eine Montage innerhalb der Aufnahmeeinrichtung ein. Die Montagestruktur kann ein Bestandteil der Pumpe sein. Sie kann zusätzlich zum Pumpengehäuse vorgesehen oder durch eine der genannten Komponenten des Pumpengehäuses, beispielsweise durch die erste Stirnwand oder die zweite Stirnwand, gebildet werden. In alternativen Ausführungen kann eine Montagestruktur als ein Bestandteil der Aufnahmeeinrichtung und somit in Bezug auf die Pumpe extern bereitgestellt werden.

Die Aufnahmeeinrichtung kann insbesondere ein Gehäuse eines mit dem Druckfluid zu versorgenden Aggregats, wie etwa eines Getriebes oder eines Motors, sein. Im montierten Zustand liegt die erste Stirnwand oder die zweite Stirnwand, vorzugsweise die erste Stirnwand, einer Anschlusswand der Aufnahmeeinrichtung axial gegenüber. Bei der Anschlusswand der Aufnahmeeinrichtung kann es sich insbesondere um einen Boden eines Aufnahmeschachts für die Pumpe handeln. An der Anschlusswand der Aufnahmeeinrichtung mündet ein Druckanschluss, über den das durch den Druckauslass strömende Druckfluid abförderbar ist. Die Dichtung dient der Herstellung einer dichten Fluidverbindung zwischen dem Druckauslass der Pumpe und dem Druckanschluss der Aufnahmeeinrichtung.

Die Pumpe kann eine Andrückeinrichtung zur Beaufschlagung der Auslassdichtung und/oder des Pumpengehäuses mit einer Andruckkraft umfassen. Die Andruckkraft wirkt von der Montagestruktur weg in axialer Richtung auf die Auslassdichtung, um diese in einen Dichtkontakt mit der Anschlusswand zu drücken, und/oder wirkt in axialer Richtung auf das Pumpengehäuse, um dieses abzudichten. Die Montagestruktur kann insbesondere dazu eingerichtet sein, die in die axiale Gegenrichtung wirkende Reaktionskraft aufzunehmen.

Die Andrückeinrichtung wird vorzugsweise durch eine mechanische Feder gebildet und kann insbesondere eine Tellerfeder sein. Die Andrückeinrichtung ist in axialer Richtung bevorzugt an einer Stirnwand des Pumpengehäuses, vorzugsweise der ersten Stirnwand, angeordnet. Die Andrückeinrichtung kann in axialer Sicht auf die Stirnwand von der Dichtung überlappt und von der Stirnwand aus gesehen hintergriffen werden. In bevorzugten Ausführungen weist die Dichtung an einem Außenumfang wenigstens eine Lasche auf, welche radial nach außen vorragt und die Andrückeinrichtung in axialer Sicht auf die Stirnwand überlappt. In Ausführungen mit einer Andrückeinrichtung, insbesondere einer Feder, werden vorzugsweise die Dichtung mittels einer Fügeverbindung und die Andrückeinrichtung mittels der Dichtung an dem Pumpengehäuse gehalten.

Die Verwendung einer Dichtung, insbesondere einer Axialdichtung, wie etwa einer Sickendichtung, zur Halterung einer als Feder gebildeten Andrückeinrichtung an einem Pumpengehäuse kann mit Vorteil mit der hier beanspruchten Halterung der Dichtung kombiniert werden, ist andererseits aber auch ungeachtet der Halterung der Dichtung vorteilhaft für die Bereitstellung der Pumpe als vormontierte Pumpeneinheit.

Die Pumpe kann beispielsweise eine Linearhubpumpe oder, bevorzugter, eine Rotationspumpe sein. Sie kann als Rotationspumpe außenachsig, beispielsweise eine Außenzahnradpumpe, oder innenachsig, beispielsweise eine Flügelzellenpumpe, Innenzahnradpumpe oder Pendelschieberpumpe, sein. Das Förderglied kann einen in der Förderkammer um eine Drehachse drehbeweglichen Rotor umfassen, der dazu dient, das Fluid von einem oder mehreren Einlässen zu einem oder mehreren Auslässen zu fördern. Der Rotor kann vorteilhafterweise zur Bildung von Förderzellen dienen, die sich bei Drehung des Rotors periodisch vergrößern und verkleinern, um das Fluid von der Niederdruckseite der Pumpe zur Hochdruckseite der Pumpe zu fördern.

Ist die Pumpe wie bevorzugt in einem Fahrzeug angeordnet, kann die Pumpe vom Antriebsmotor des Fahrzeugs, beispielsweise einem Verbrennungsmotor oder einem Elektromotor, angetrieben werden. In Hybridfahrzeugen kann die Pumpe entweder vom Antriebs-Verbrennungsmotor oder vom Antriebs-Elektromotor angetrieben werden. In einer vorteilhaften Modifikation kann der Antrieb der Pumpe auch so gestaltet sein, dass die Pumpe wahlweise vom Verbrennungsmotor oder vom Elektromotor oder von diesen beiden Motoren gemeinsam antreibbar ist. So können der Verbrennungsmotor und der Elektromotor die Pumpe insbesondere über ein Additionsgetriebe antreiben.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich nachfolgend auf in Figuren illustrierte Ausführungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
Aspekt 1. Pumpe zur Beaufschlagung eines Aggregats, beispielsweise eines Getriebes, mit Fluid, die Pumpe umfassend:
   1.1 ein Pumpengehäuse (1) mit
      - einem Einlass (6) für das Fluid auf einer Niederdruckseite,
      - einem Auslass (8) für das Fluid auf einer Hochdruckseite,
      - einer Umfangswand (2), die eine Förderkammer (5) der Pumpe umgibt, und
      - einer Stirnwand (3) mit einer der Förderkammer (5) axial abgewandten äußeren Stirnfläche, an welcher der Auslass (8) mündet,
   1.2 ein in der Förderkammer (5) bewegliches Förderglied zur Förderung des Fluids von der Niederdruckseite zur Hochdruckseite,
   1.3 eine Dichtung (S) mit einer Dichtungsschleife (51), die den Auslass (8) zur Abdichtung an der äußeren Stirnfläche der Stirnwand (3) umgibt,
   1.4 ein weibliches Fügeelement (13; 23; 33; 43) mit einem axial erstreckten Hohlraum (14; 24; 34; 44), und
   1.5 ein männliches Fügeelement (15; 25; 35; 45), das eines aus Pumpengehäuse (1) und Dichtung (S) durchragt oder von einem aus Pumpengehäuse (1) und Dichtung (S) vorragt,
   1.6 wobei das männliche Fügeelement (15; 25; 35; 45) im Hohlraum (14; 24; 34; 44) mit dem weiblichen Fügeelement (13; 23; 33; 43) in einem axial auf Zug belastbaren Fügeeingriff ist, und
   1.7 wobei die Dichtung (S) an einer vom Pumpengehäuse (1) axial abgewandten Rückseite axialen Kontakt mit einem der Fügeelemente (13, 15; 43, 45) hat und dadurch am Pumpengehäuse (1) gehalten wird und/oder
   1.8 das weibliche Fügelement (23; 33; 43) auf das männliche Fügeelement (25; 35; 45) geschraubt oder gesteckt ist.
Aspekt 2. Pumpe nach dem vorhergehenden Aspekt, wobei das männliche Fügeelement (15; 25; 35; 45) den Hohlraum (14; 24; 34; 44) verschließt.
Aspekt 3. Pumpe nach einem der vorhergehenden Aspekte, wobei sich der Hohlraum (14; 24; 34; 44) bis zu einer der Dichtung (S) axial zugewandten Öffnung des weiblichen Fügeelements (13; 23; 33; 43) erstreckt und das männliche Fügeelement (15; 25; 35; 45) durch die Öffnung ragt und diese verschließt.
Aspekt 4. Pumpe nach einem der vorhergehenden Aspekte, wobei sich der Hohlraum (14; 24; 34; 44) bis zu einer der Dichtung (S) axial zugewandten Öffnung des weiblichen Fügeelements (13; 23; 33; 43) erstreckt und von der Öffnung abgesehen geschlossen ist.
Aspekt 5. Pumpe nach einem der vorhergehenden Aspekte, wobei der Hohlraum (14; 24; 44) ein Sackloch ist.
Aspekt 6. Pumpe nach einem der vorhergehenden Aspekte, wobei das eine der Fügeelemente (15; 43) bei der Herstellung des Fügeeingriffs relativ zum Pumpengehäuse (1) und relativ zur Dichtung (S) in den Kontakt mit der Rückseite der Dichtung (S) beweglich ist.
Aspekt 7. Pumpe nach einem der vorhergehenden Aspekte, wobei das mit der Rückseite der Dichtung (S) im axialen Kontakt befindliche Fügeelement (15; 43) die Dichtung (S) axial gegen das Pumpengehäuse (1) drückt.
Aspekt 8. Pumpe nach einem der vorhergehenden Aspekte, wobei eines der Fügeelemente (13; 23; 35; 45), vorzugsweise das weibliche Fügeelement (13; 23), in oder an der Stirnwand (3) geformt oder eingesetzt ist oder vorzugsweise mit axialem Gleitkontakt in die Stirnwand (3) ragt, diese vorzugsweise durchragt.
Aspekt 9. Pumpe nach einem der vorhergehenden Aspekte, wobei eines der Fügeelemente (13; 23; 35; 45), vorzugsweise das weibliche Fügeelement (13; 23), mit einem stabförmigen Abschnitt in die Stirnwand (3) ragt, diese vorzugsweise durchragt.
Aspekt 10. Pumpe nach einem der vorhergehenden Aspekte, wobei eines der Fügeelemente (13; 23; 35; 45), vorzugsweise das weibliche Fügeelement (13; 23), mit einem stabförmigen Abschnitt in die Umfangswand (2) ragt, diese vorzugsweise durchragt.
Aspekt 11. Pumpe nach einem der vorhergehenden Aspekte, wobei die Umfangswand (2) und die Stirnwand (3) miteinander gefügt sind und eines der Fügeelemente (13; 23; 35; 45), vorzugsweise das weibliche Fügeelement (13; 23), dazu dient, die Stirnwand (3) in Bezug auf die Drehwinkelposition relativ zur Umfangswand (2) zu positionieren.
Aspekt 12. Pumpe nach einem der vorhergehenden Aspekte, wobei das männliche Fügeelement (15; 35; 45) eine Schraube, ein Gewindestift, ein Blindniet oder ein Pressbolzen oder Pressstift ist.
Aspekt 13. Pumpe nach einem der vorhergehenden Aspekte, wobei das männliche Fügeelement (15) einen Schaft und einen Kopf aufweist, der Schaft einen Durchgang der Dichtung (S) axial durchragt und in den Hohlraum (14) ragt und das männliche Fügeelement (15) mit dem Kopf axial gegen die Dichtung (S) und die Dichtung (S) dadurch gegen das Pumpengehäuse (1) drückt.
Aspekt 14. Pumpe nach einem der Aspekte 1 bis 8, wobei das männliche Fügeelement (35) vom Pumpengehäuse (1) vorragt und die Dichtung (S) mit dem weiblichen Fügeelement (33) versehen ist.
Aspekt 15. Pumpe nach einem der Aspekte 1 bis 8, wobei das männliche Fügeelement (35; 45) vom Pumpengehäuse (1) axial vorragt und die Dichtung (S) durchragt und das weibliche Fügeelement (33; 43) eine Hutmutter oder Steckbuchse ist.
Aspekt 16. Pumpe nach einem der vorhergehenden Aspekte, wobei eines der Fügeelemente (13; 23; 35; 45), vorzugsweise das weibliche Fügeelement (13; 23), Bestandteil des Pumpengehäuses (1) ist.
Aspekt 17. Pumpe nach einem der vorhergehenden Aspekte, wobei die Fügeelemente (13, 15; 43, 45) im Hohlraum (14; 44) in einem Schraubeingriff sind.
Aspekt 18. Pumpe nach einem der vorhergehenden Aspekte, wobei an einem Außenumfang der Dichtung (S) wenigstens eine Lasche (16) nach außen vorragt und das männliche Fügeelement (15; 45) die Lasche (16) durchragt.
Aspekt 19. Pumpe nach einem der vorhergehenden Aspekte, wobei das weibliche Fügeelement (13; 23) Bestandteil des Pumpengehäuses (1) ist und die Umfangswand (2) und wenigstens eine aus der Stirnwand (3) und einer zweiten Stirnwand (4) relativ zueinander positioniert und mittels des Fügeeingriffs axial zusammenhält, wobei der Hohlraum (14; 24) an einer der Dichtung (S) zugewandten Stirnseite des weiblichen Fügeelements (13; 23) vorgesehen ist.
Aspekt 20. Pumpe nach dem vorhergehenden Aspekt, wobei die zweite Stirnwand (4) und die Umfangswand (2) miteinander gefügt oder miteinander urgeformt, beispielsweise gegossen, sind und zusammen einen Gehäusetopf bilden.
Aspekt 21. Pumpe nach dem vorhergehenden Aspekt, wobei das weibliche Fügeelement (13; 23) in einer Ausnehmung der zweiten Stirnwand (4) durch Reibschluss gehalten wird und die Umfangswand (2) durchragt.
Aspekt 22. Pumpe nach einem der vorhergehenden Aspekte, wobei der Hohlraum (14; 44) ein Innengewinde, vorzugsweise ein metrisches Innengewinde kleiner M5, aufweist.
Aspekt 23. Pumpe nach einem der vorhergehenden Aspekte, wobei jeweils eines der im Fügeeingriff befindlichen Fügeelemente (13; 45) durch einen Normstift mit Gewinde gebildet wird.
Aspekt 24. Pumpe nach einem der vorhergehenden Aspekte, wobei das weibliche Fügeelement (13) durch einen Normstift mit Innengewinde, vorzugsweise nach DIN EN ISO 8735 oder DIN EN ISO 8733 in der am Tag der Anmeldung geltenden Fassung, gebildet wird.
Aspekt 25. Pumpe nach einem der vorhergehenden Aspekte, wobei das männliche Fügeelement (45) durch einen Normstift mit Außengewinde, vorzugsweise nach DIN EN ISO 4026, DIN EN ISO 4027, DIN EN ISO 4028 oder DIN EN ISO 4029 in der am Tag der Anmeldung geltenden Fassung, gebildet wird.
Aspekt 26. Pumpe zur Beaufschlagung eines Aggregats, beispielsweise eines Getriebes, mit Fluid, die Pumpe umfassend:
   1.1 ein Pumpengehäuse (1) mit
      - einem Einlass (6) für das Fluid auf einer Niederdruckseite,
      - einem Auslass (8) für das Fluid auf einer Hochdruckseite,
      - einer Umfangswand (2), die eine Förderkammer (5) der Pumpe umgibt, und
      - einer Stirnwand (3) mit einer der Förderkammer (5) axial abgewandten äußeren Stirnfläche, an welcher der Auslass (8) mündet,
   1.2 ein in der Förderkammer (5) bewegliches Förderglied zur Förderung des Fluids von der Niederdruckseite zur Hochdruckseite,
   1.3 eine in axialer Richtung federelastische Feder (17), die den Auslass (8) an der äußeren Stirnfläche der Stirnwand (3) umgibt, und
   1.4 eine Dichtung (S) mit einer Dichtungsschleife (51), die den Auslass (8) zur Abdichtung an der äußeren Stirnfläche der Stirnwand (3) umgibt,
   1.5 wobei die Dichtung (S) mittels Fügeverbindung und die Feder (17) mittels der Dichtung (S) am Pumpengehäuse (1) gehalten werden.
Aspekt 27. Pumpe nach dem vorhergehenden Aspekt, wobei die Feder (17) in axialer Richtung zwischen der Stirnwand (3) und der Dichtung (S) angeordnet ist und die Dichtung (S) die Feder (17) in axialer Sicht auf die Stirnwand (3) wenigstens teilweise überlappt.
Aspekt 28. Pumpe nach einem der zwei vorhergehenden Aspekte, wobei an einem Außenumfang der Dichtung (S) wenigstens eine Lasche (16) nach außen vorragt und die Lasche (16) die Feder (17) in axialer Sicht auf die Stirnwand (3) wenigstens teilweise überlappt und von der Stirnwand (3) aus gesehen hintergreift.
Aspekt 29. Pumpe nach einem der drei vorhergehenden Aspekte, wobei die Feder (17) durch eine Tellerfeder ausgebildet wird.
Aspekt 30. Pumpe nach einem der vier vorhergehenden Aspekte, wobei die Fügeverbindung, durch welche die Dichtung (S) an dem Pumpengehäuse (1) gehalten wird, entsprechend einem der Aspekte 1 bis 25 ausgebildet ist.
Aspekt 31. Pumpe nach einem der vorhergehenden Aspekte, wobei die Feder (17) nach Aspekt 26 und/oder die Dichtung (S) aus Metall, reinem Metall und/oder einer oder mehreren Metalllegierungen, besteht oder jeweils bestehen.

Die Erfindung wird nachfolgend anhand von Ausführungsbeispielen erläutert. An den Ausführungsbeispielen offenbarte Merkmale bilden die Gegenstände der Ansprüche, der Aspekte und auch die vorstehenden erläuterten Ausgestaltungen vorteilhaft weiter. Es zeigen:
- Figur 1: eine isometrische Ansicht einer Pumpe eines ersten Ausführungsbeispiels,
- Figur 2: die Pumpe in einer Frontansicht,
- Figur 3: die Pumpe des ersten Ausführungsbeispiels in einem Längsschnitt,
- Figur 4: eine Detailansicht eines Fügeeingriffs gemäß des ersten Ausführungsbeispiels,
- Figur 5: eine schematische Ansicht eines Fügeeingriffs eines zweiten Ausführungsbeispiels,
- Figur 6: eine schematische Ansicht eines Fügeeingriffs eines dritten Ausführungsbeispiels, und
- Figur 7: eine schematische Ansicht eines Fügeeingriffs eines vierten Ausführungsbeispiels.

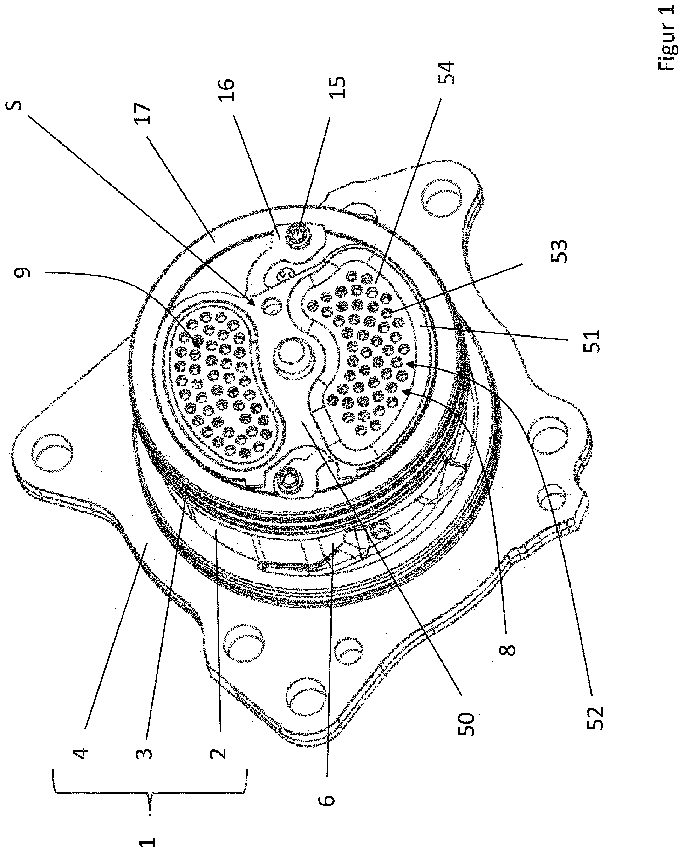

Figur 1 offenbart eine Pumpe eines ersten Ausführungsbeispiels in isometrischer Ansicht. Die Pumpe weist ein Pumpengehäuse 1 mit einer Umfangswand 2, einer ersten Stirnwand 3 und einer zweiten Stirnwand 4 auf. An der zweiten Stirnwand 4 ist eine Montagestruktur, mit welcher die Pumpe an einer Aufnahmeeinrichtung beispielsweise mittels Schrauben fixiert werden kann, ausgebildet. Auf der der Montagestruktur abgewandten Seite der Umfangswand 2 ist die erste Stirnwand 3 ausgebildet. Die Umfangswand 2, die erste Stirnwand 3 und die zweite Stirnwand 4 sind als separate Bauteile ausgebildet.

Die Pumpe ist zweiflutig, weist also eine erste Arbeitsflut und eine zweite Arbeitsflut auf. Dementsprechend weist die nicht näher dargestellte Förderkammer einen ersten Einlass 6 und einen ersten Druckauslass 8 für die erste Arbeitsflut sowie einen zweiten Einlass und einen zweiten Druckauslass 9 für die zweite Arbeitsflut auf. Die Förderkammer wird in radialer Richtung von der Umfangswand 2 begrenzt. Die Förderkammer wird axial beidseitig von der ersten Stirnwand 3 und der zweiten Stirnwand 4 begrenzt. An der Umfangswand 2 ist in Umfangsrichtung der erste Einlass 6 und dem ersten Einlass 6 radial gegenüberliegend und nicht dargestellt der zweite Einlass ausgebildet.

Die Umfangswand 2 bildet einen geschlossenen Ring, während die Stirnwände 3 und 4 jeweils plattenförmig sind. Die beiden Auslässe 8, 9 münden an einer von der Förderkammer abgewandten äußeren Stirnseite der ersten Stirnwand 3. Der erste Auslass 8 und der zweite Auslass 9 werden von einer Dichtung S, insbesondere eine Sickendichtung mit wenigstens zwei Sickenschleifen, umgeben. An dieser Stelle sei darauf hingewiesen, dass die Erfindung nicht auf zweiflutige Pumpen beschränkt ist und beispielsweise auch bei einer einflutigen Pumpe mit nur einem Auslass zur Anwendung kommen kann.

Die Dichtung S weist mehrere Dichtungsschleifen 51 auf, die wie bevorzugt, aber nur beispielhaft jeweils in Form einer Sickenschleife um einen Innenbereich der Dichtung S umlaufen. Die Dichtungsschleife 51 umgibt einen Innenbereich 52 der Dichtung S, der dem ersten Druckauslass 8 axial gegenüber liegt und mit diesem in axialer Sicht überlappt. Die Dichtung S weist ferner wenigstens eine zweite Dichtungsschleife auf, welche einen Innenbereich der Dichtung S umgibt, der dem zweiten Druckauslass 9 axial gegenüberliegt und mit diesem in axialer Sicht überlappt.

Die erste Dichtungsschleife 51 ist im Innenbereich 52 im Vergleich zu herkömmlichen Dichtungsschleifen, hier Sickenschleifen, versteift. Die Versteifung wird mittels einer ersten Versteifungsstruktur 54 erzielt, die sich vom Innenrand der Dichtungsschleife 51 umlaufend in den Innenbereich 52 erstreckt. Die Versteifungsstruktur 54 ist als plane, dünne Scheibe geformt. Sie weist eine Mehrzahl nebeneinander angeordneter Durchgänge 53 auf, durch die im Pumpenbetrieb das Fluid strömen kann. Die Versteifungsstruktur 54 erstreckt sich längs des gesamten Innenumfangs der Dichtungsschleife 51 und steift die Dichtungsschleife 51 über den gesamten Innenumfang nach radial innen gleichmäßig aus. Die Durchgänge 53 sind kreisrunde Durchgangsbohrungen, können in Abwandlungen aber auch grundsätzlich andere Querschnittsformen haben, beispielsweise langgestreckte, gerade oder gebogene Schlitze sein.

Auch die zweite Dichtungsschleife ist im Innenbereich im Vergleich zu herkömmlichen Dichtungsschleifen versteift. Die Versteifung wird mittels einer zweiten Versteifungsstruktur erzielt, die sich vom Innenrand der Dichtungsschleife umlaufend in den Innenbereich erstreckt. Die Versteifungsstruktur ist als plane, dünne Scheibe geformt. Sie weist eine Mehrzahl nebeneinander angeordneter Durchgänge auf, durch die im Pumpenbetrieb das Fluid strömen kann. Die Versteifungsstruktur erstreckt sich längs des gesamten Innenumfangs der Dichtungsschleife und steift die Dichtungsschleife über den gesamten Innenumfang nach radial innen gleichmäßig aus. Die Durchgänge sind kreisrunde Durchgangsbohrungen, können in Abwandlungen aber auch grundsätzlich andere Querschnittsformen haben, beispielsweise langgestreckte, gerade oder gebogene Schlitze sein.

Die erste Dichtungsschleife 51 und die zweite Dichtungsschleife sind in der axialen Sicht nebeneinander angeordnet, so dass auch die zugehörigen Innenbereiche 52 nebeneinander und mit Abstand voneinander angeordnet sind. Im Ausführungsbeispiel verlaufen die Dichtungsschleifen separat in einem Abstand voneinander. Zwischen den Dichtungsschleifen kann ein zentraler Durchgang ausgebildet sein, welcher der Zentrierung der Dichtung S am Pumpengehäuse 1 dient.

Die Dichtung S kann einlagig oder mehrlagig ausgebildet sein. Im vorliegenden Beispiel umfasst sie eine erste Dichtungslage 50. Die erste Dichtungsschleife 51 und die zweite Dichtungsschleife sowie die erste Versteifungsstruktur 54 und die zweite Versteifungsstruktur sind Bestandteil der ersten Dichtungslage 50. Für den Fall, dass die Dichtung S wie in den Ausführungsbeispielen mehrlagig ist, weist sie eine zweite Dichtungslage auf, welche beispielsweise eine weitere dritte oder vierte Sickenschleife mit jeweiliger Versteifungsstruktur ausbildet. Für den Fall, dass die Dichtung S mehrere Dichtungslagen aufweist, liegen diese zweckmäßigerweise unmittelbar aufeinander. Sie können stoffschlüssig miteinander gefügt sein, beispielsweise mittels Schweiß- oder Lötverbindung oder einer Klebeverbindung.

Am radial äußeren Rand der Dichtung S, insbesondere an der Dichtungslage 50, sind mehrere, beispielhaft zwei radial einander gegenüberliegende Laschen 16 geformt, welche jeweils einen Durchgang aufweisen, welchen ein männliches Fügeelement 15 in Richtung der ersten Stirnwand 3 durchragt. Die Laschen 16 sind vorteilhafterweise derart ausgestaltet, dass sie eine Andrückeinrichtung 17 in Form einer mechanischen Feder, beispielhaft eine Tellerfeder, zumindest teilweise axial überlappen. Auf diese Weise werden die Dichtung S mittels Fügeverbindung und die Andrückeinrichtung 17 mittels der Dichtung S am Pumpengehäuse 1 gehalten.

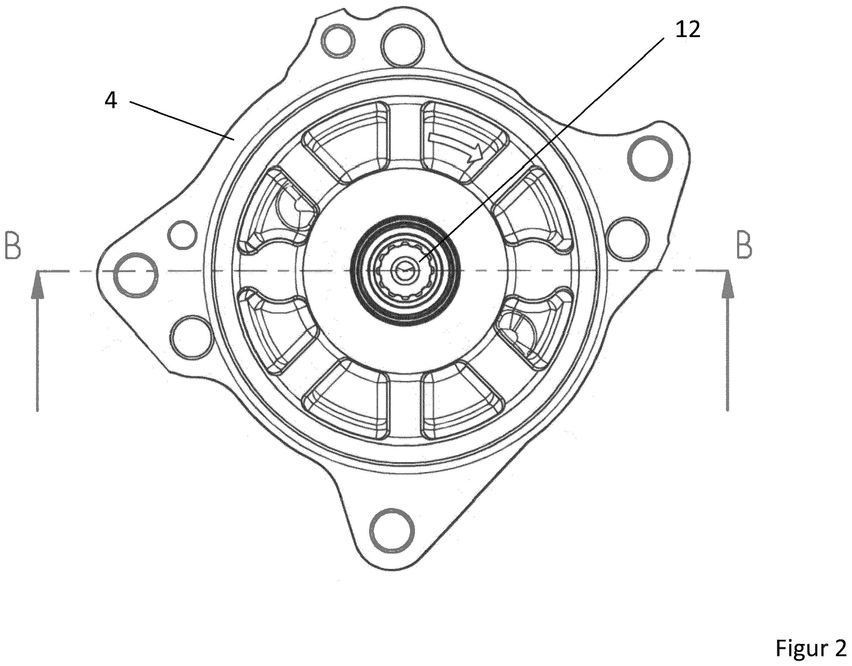

Figur 2 eine Frontansicht auf die zweite Stirnwand 4, wobei die Montagestruktur von der zweiten Stirnwand 4 ausgebildet wird. Die zweite Stirnwand 4 weist mittig einen Durchgang für die Antriebswelle 12 des Rotors auf.

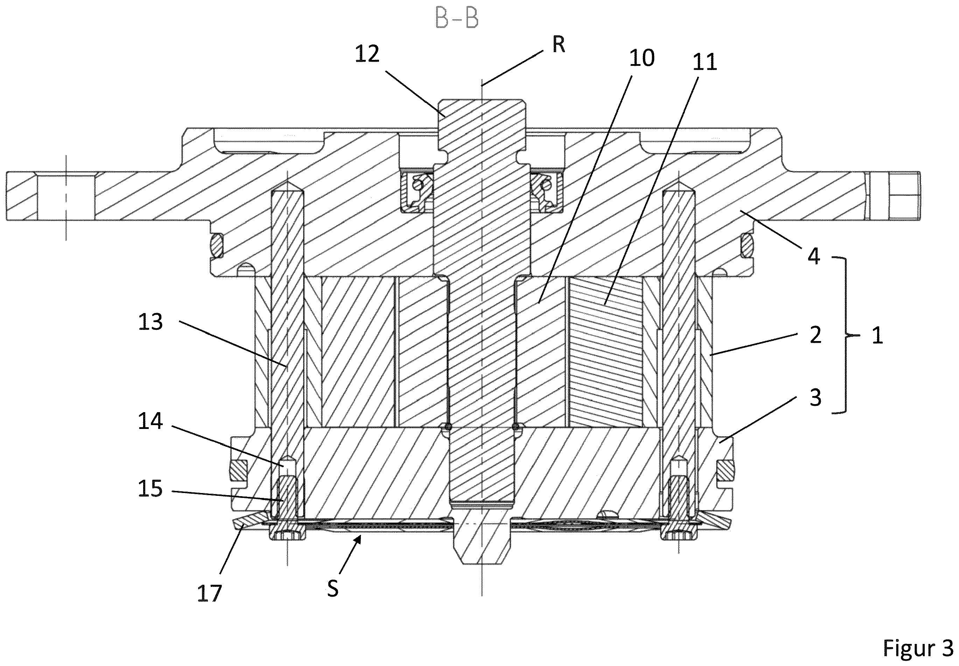

Figur 3 ist ein Längsschnitt B-B durch die Pumpe. Eine Antriebswelle 12 durchragt die zweite Stirnwand 4 in Axialrichtung. Mit der Antriebswelle 12 ist der Rotor 10 drehunbeweglich verbunden, sodass eine Rotation der Antriebswelle 12 um die Drehachse R zu einer Rotation des Rotors 10 um die Drehachse R führt. Der Rotor 10 lagert wenigstens einen Flügel 11 radial beweglich. Für den Fachmann erschließt sich, dass die Erfindung nicht auf Flügelzellenpumpen der vorliegenden Art beschränkt ist und auch bei anderen Pumpen zur Anwendung kommen kann.

Die Dichtung S ist mit der der zweiten Stirnwand 4 axial abgewandten Stirnfläche der ersten Stirnwand 3 in einem axialen Dichtkontakt. Bei der Montage der Pumpe in oder an einer Aufnahmeeinrichtung liegt die erste Stirnwand 3 einer Anschlusswand der Aufnahmeeinrichtung axial gegenüber, wobei die Dichtung S zwischen der ersten Stirnwand 3 und der Anschlusswand der Aufnahmeeinrichtung angeordnet ist. Die Dichtung S befindet sich im eingebauten Zustand auch mit der Anschlusswand der Aufnahmeeinrichtung in einem Dichtkontakt, so dass im eingebauten Zustand der Pumpe der erste Auslass 8 vom zweiten Auslass 9 fluidisch getrennt ist.

Von der zweiten Stirnwand 4 ragt ein weibliches Fügeelement 13 axial in Richtung auf die erste Stirnwand 3 vor. Das weibliche Fügeelement 13 dient der Fixierung der Dichtung S am Pumpengehäuse 1 und kann auch der Positionierung der zweiten Stirnwand 4 und der ersten Stirnwand 3 in Bezug auf die Drehwinkelposition relativ zur Umfangswand 2 dienen. Zudem halten die Dichtung S und das weibliche Fügeelement 13 im Fügeeingriff mit einem männlichen Fügeelement das Pumpengehäuse 1 zusammen. Das weibliche Fügeelement 13 ist mit der zweiten Stirnwand 4 fest verbunden, beispielsweise durch Einpressen, thermisches Fügen oder Verschrauben.

Das weibliche Fügeelement 13 ragt von der zweiten Stirnwand 4 vor und durchragt sowohl die Umfangswand 2 als auch die erste Stirnwand 3. Das weibliche Fügeelement 13 kann über die Stirnwand axial vorragen oder, bevorzugter, mit einer der Dichtung S zugewandten äußeren Stirnfläche der Stirnwand 3 bündig abschließen oder, noch bevorzugter, hinter dieser äußeren Stirnfläche zurückstehen. Letzteres ist im Ausführungsbeispiel verwirklicht.

Das weibliche Fügeelement 13 weist an seinem der zweiten Stirnwand 4 axial abgewandten Ende einen Hohlraum 14 auf, welcher sich von der der zweiten Stirnwand 4 axial abgewandten Stirnfläche des Fügeelements 13 axial in Richtung auf die zweite Stirnwand 4 erstreckt. Das Fügeelement 13 weist, mit anderen Worten, an seinem der Dichtung S axial zugewandten Stirnende eine Öffnung und daran anschließend den Hohlraum 14 auf. Der Hohlraum 14 weist ein Innengewinde, bevorzugt ein metrisches Innengewinde, auf. Das weibliche Fügeelement 13 ist ein Normstift mit Innengewinde, vorzugsweise nach DIN EN ISO 8735 oder DIN EN ISO 8733.

Das männliche Fügeelement 15 ist eine Schraube, welche mit dem Innengewinde des weiblichen Fügeelements 13 den Fügeeingriff in Form eines Schraubeneingriffs bildet.

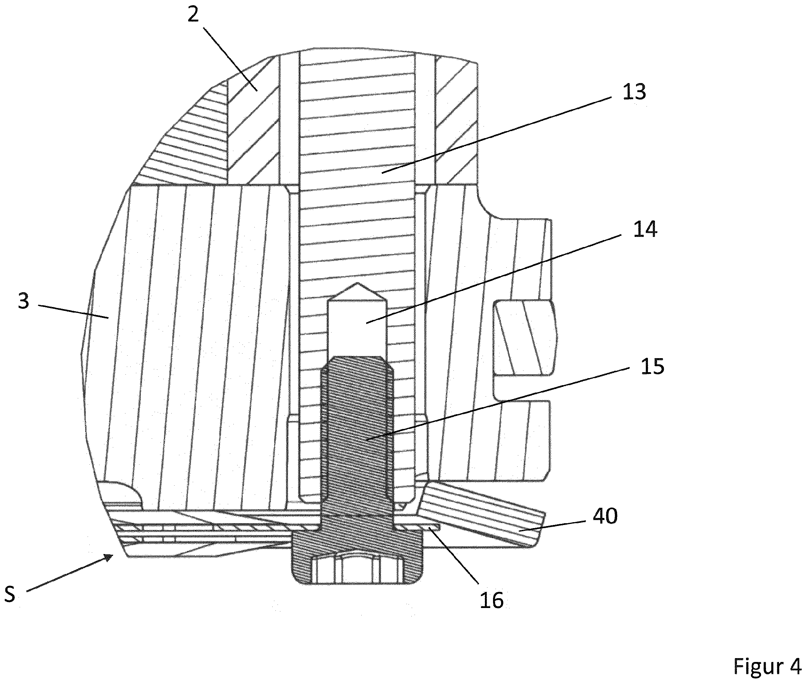

Figur 4 zeigt den Schraubeneingriff zwischen dem männlichen Fügeelement 15 und dem weiblichen Fügeelement 13 im Detail. Dabei durchragt der Schaft des männlichen Fügeelements 15 einen Durchgang der Dichtung S axial und ragt in den Hohlraum 14 des weiblichen Fügeelements 13. Der Durchgang der Dichtung S ist an einem radial äußeren Rand der Dichtung S vorgesehen und kann insbesondere im Bereich der Laschen 16 gebildet sein. Der Kopf des männlichen Fügeelements 15 drückt axial gegen die Dichtung S, sodass die Dichtung S an einer vom Pumpengehäuse 1 axial abgewandten Rückseite axialen Kontakt mit dem männlichen Fügeelement 15 hat. Das männliche Fügeelement 15 spannt die Dichtung S axial gegen das Pumpengehäuse 1.

Der Fügeeingriff ist in axialer Sicht auf die Dichtung S radial außerhalb der Dichtungsschleifen 51 und somit außerhalb des Dichtkontakts mit einerseits der Stirnwand 3 und andererseits der im montierten Zustand der Pumpe axial gegenüberliegenden, in den Figuren nicht dargestellten Anschlusswand der Aufnahmeeinrichtung in jeweils einer der nach radial außen vorragenden Laschen 16 vorgesehen. Die Laschen 16 sind biegeelastisch und ausreichend nachgiebig, so dass eine durch den Fügeeingriff der Fügelemente 13 und 15 bewirkte Fixierung der Dichtung S am Pumpengehäuse 1 den Dichtkontakt nicht beeinträchtigt.

Die Andrückeinrichtung 17 ist axial zwischen der ersten Stirnwand 3 und der Dichtung S angeordnet, wobei die Dichtung S die Andrückeinrichtung 17 in axialer Sicht auf die erste Stirnwand 3 in einem radial inneren Bereich der Andrückeinrichtung 17 überlappt und somit von der Stirnwand 3 aus gesehen hintergreift, vorzugsweise mit den Laschen 16. Auf diese Weise wird die Andrückeinrichtung 17 mittels der Dichtung S am Pumpengehäuse 1 gehalten. Die als mechanische Feder, im Ausführungsbeispiel als Tellerfeder gebildete Andrückeinrichtung 17 ist dazu ausgebildet, die Gehäusewände 2, 3 und 4 des Pumpengehäuses 1 im montierten Zustand der Pumpe axial zusammen zu drücken und die Förderkammer dadurch abzudichten.

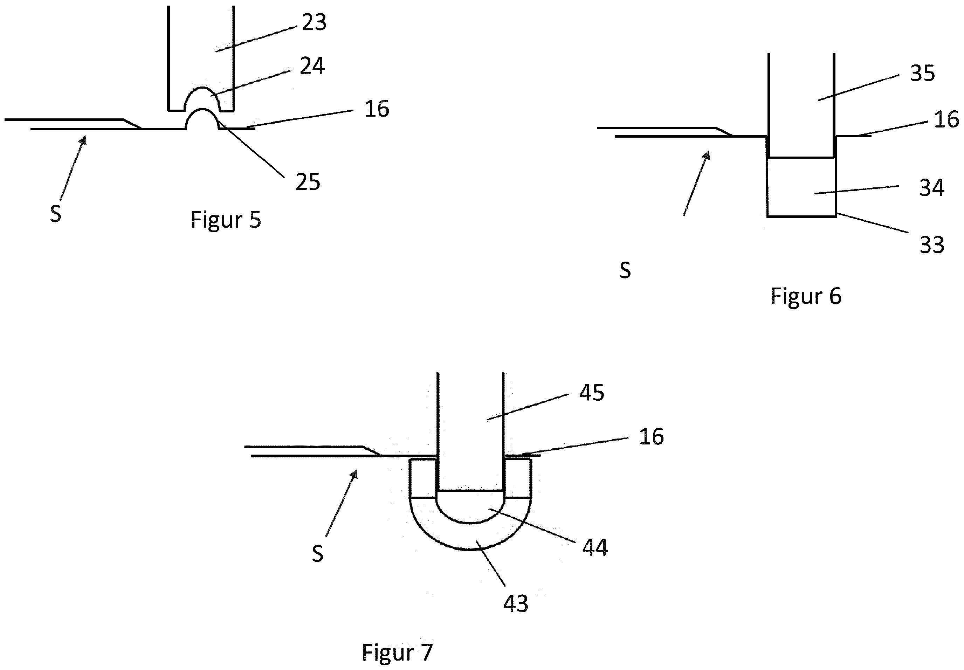

Die Figuren 5-7 zeigen schematisch weitere Ausführungsbeispiele des Fügeeingriffs jeweils zwischen einem weiblichen und einem männlichen Fügeelement. Merkmale des ersten Ausführungsbeispiels, welche insbesondere die Dichtung S und die Pumpe betreffen, gelten soweit nicht ausdrücklich anders erwähnt auch für die folgenden Ausführungsbeispiele. Soweit Unterschiede nicht erläutert oder anhand der Figuren offenbar werden, gelten die vorstehend zum ersten Ausführungsbeispiel gemachten Ausführungen in gleicher Weise auch für die weiteren Ausführungsbeispiele.

Figur 5 zeigt ein zweites Ausführungsbeispiel, in dem das männliche Fügeelement 25 durch die Dichtung S ausgebildet ist und diese nicht durchragt. Dabei weist die Dichtung S, insbesondere die Laschen 16, eine konvexe Wölbung oder Ausbauchung auf, welche von der Dichtung S in Richtung auf die erste Stirnwand 3 bzw. in Richtung des weiblichen Fügeelements 23 vorragt. Anstelle einer Wölbung oder Ausbauchung kann das männliche Fügeelement der Dichtung S auch als ein vorragender Stift, Nocken oder dergleichen gebildet sein.

Das weibliche Fügeelement 23 indes weist in Bezug zu der ersten Stirnwand 3 einen konkaven Hohlraum 24 auf, in welchen das männliche Fügeelement 25 zur Herstellung eines Fügeeingriffs hineinragen kann. Der Hohlraum kann dabei an der ersten Stirnwand 3 direkt oder an einem separaten Bauteil, beispielsweise an einem wie in Figur 4 dargestellten Halteelement 13, ausgebildet sein.

Der Hohlraum 24 des weiblichen Fügeelements 23 ist komplementär zu der Ausbauchung des männlichen Fügeelements ausgebildet. Der Fügeeingriff zwischen dem männlichen Fügeelement 25 und dem weiblichen Fügeelement 23 ist als Steckverbindung ausgebildet. Das männliche Fügeelement 25 hat gegenüber dem Hohlraum 24 des weiblichen Fügeelements 23 ein Übermaß, sodass das männliche Fügeelement 25 in das weibliche Fügeelement 23 hineingedrückt werden kann und in dem Fügeeingriff gehalten wird. Dabei wird die Haltekraft, mit welcher das männliche Fügeelement 25 im Fügeeingriff mit dem weiblichen Fügeelement 23 gehalten wird, durch das Übermaß des männlichen Fügeelements 25 bestimmt. Figur 6 zeigt einen Fügeeingriff in einem dritten Ausführungsbeispiel, in dem das weibliche Fügeelement 33 durch die Dichtung S ausgebildet ist. Dabei weist die Dichtung S, beispielsweise die jeweilige Lasche 16, in Ausbildung des weiblichen Fügeelements 35 eine Ausbauchung mit einem Hohlraum 34 auf, welcher sich in Richtung von der ersten Stirnwand 3 weg erstreckt. Das weibliche Fügeelement 33, d.h. die Ausbauchung, ist zur Stirnwand 3 hin offen. Das männliche Fügeelement 35 ragt von der ersten Stirnwand 3 vor und im Fügeeingriff in das weibliche Fügeelement 33 hinein. Dieser Fügeeingriff ist ebenfalls eine Steckverbindung. Das männliche Fügeelement 35 kann von der Stirnwand 3 selbst oder von einem separaten Bauteil, beispielsweise von einem Halter für das Pumpengehäuse 1, gebildet werden. So kann das Fügeelement 35 eine axiale Abragung der Stirnwand 3, also unmittelbar an der Stirnwand 3 geformt sein. Ist das männliche Fügeelement 35 ein separates Bauteil, kann es die Stirnwand 3 den Haltern der Figur 3 entsprechend durchragen. So kann beispielsweise auch der jeweilige Halter des ersten Ausführungsbeispiels verlängert und am frei vorragenden Ende zum männlichen Fügeelement 35 modifiziert werden.

Zur Bildung des Fügeeingriffs zwischen dem männlichen Fügeelement 35 und dem weiblichen Fügeelement 33 wird das weibliche Fügeelement 33 auf das männliche Fügeelement 35 gesteckt. Das männliche Fügeelement 35 hat gegenüber dem Hohlraum 34 des weiblichen Fügeelements 33 ein Übermaß, sodass das männliche Fügeelement 35 in das weibliche Fügeelement 33 hineingedrückt werden kann und in dem Fügeeingriff gehalten wird. Dabei wird die Haltekraft, mit welcher das männliche Fügeelement 35 im Fügeeingriff mit dem weiblichen Fügeelement 33 gehalten wird, durch das Übermaß des männlichen Fügeelements 35 bestimmt.

Als Steckeingriff wird auch ein Schnapp- oder Rasteingriff der Fügeelemente in der Art einer Druckknopfverbindung verstanden. Grundsätzlich ist es vorteilhaft, wenn der jeweilige Steckeingriff so gestaltet ist, dass der Hohlraum 24 bzw. 34 durch das männliche Fügeelement 25 bzw. 35 soweit verschlossen wird, dass eventuell eingetragene Schmutzpartikel im Hohlraum 24 bzw. 34 eingeschlossen sind und im Pumpenbetrieb nicht ausgetragen werden.

Figur 7 zeigt ein viertes Ausführungsbeispiel eines Fügeeingriffs, in dem das männliche Fügeelement 45 einen Durchgang der Dichtung S in Richtung von der ersten Stirnwand 3 weg durchragt. Das männliche Fügeelement 45 ragt von der ersten Stirnwand 3 vor und bildet mit dem weiblichen Fügeelement 43 einen Fügeeingriff. Das männliche Fügeelement 45 kann von der Stirnwand 3 selbst oder von einem separaten Bauteil, beispielsweise von einem Halter für das Pumpengehäuse 1, gebildet werden. So kann das Fügeelement 45 eine axiale Abragung der Stirnwand 3, also unmittelbar an der Stirnwand 3 geformt sein. Ist das männliche Fügeelement 45 ein separates Bauteil, kann es die Stirnwand 3 den Haltern der

Figur 3 entsprechend durchragen. So kann beispielsweise auch der jeweilige Halter des ersten Ausführungsbeispiels verlängert und am frei vorragenden Ende zum männlichen Fügeelement 45 modifiziert werden.

Das männliche Fügeelement 45 weist an seinem der zweiten Stirnwand 4 (Figur 3) axial abgewandten Ende ein Außengewinde, insbesondere ein metrisches Außengewinde, auf. Dabei kann das männliche Fügeelement 45 ein Gewinde nur in einem axialen Endabschnitt aufweisen oder als Gewindestift ausgebildet sein, welcher über seine gesamte axiale Länge ein Gewinde aufweist. In Ausführungen als Gewindestift befindet sich das männliche Fügeelement 45 vorzugsweise sowohl mit dem weiblichen Fügelement 43 als auch mit der zweiten Stirnwand 4 in einem Schraubeneingriff.

Das weibliche Fügeelement 43 ist in Form einer Mutter, insbesondere in Form einer Hutmutter, gebildet. Das weibliche Fügeelement 43 drückt im Fügeeingriff mit dem männlichen Fügeelement 45 axial gegen die Dichtung S, sodass die Dichtung S an einer vom Pumpengehäuse 1 axial abgewandten Rückseite einen axialen Kontakt mit dem weiblichen Fügeelement 45 hat, und hält die Dichtung S so am Pumpengehäuse 1.

In Abwandlungen des vierten Ausführungsbeispiels können das männliche Fügeelement und das separat von der Dichtung S vorgesehene weibliche Fügeelement auch Steckelemente zur Herstellung eines Steckeingriffs anstelle eines Schraubeingriffs sein.

In weiteren Abwandlungen können Fügeelemente in Form von Schraubelementen, wie etwa Gewindestifte und/oder Muttern, fest mit der Dichtung S gefügt und vorzugsweise auf den Laschen 16 angeordnet sein. Das jeweilige Schraubgegenelement, wie etwa das Fügeelement 13 oder das Fügeelement 45, ist in derartigen Ausführungen am Pumpengehäuse 1 zwar axial festgelegt, aber mit dem Pumpengehäuse 1 drehbar verbunden, um den Fügeeingriff als Schraubeingriff herstellen zu können.

### Bezugszeichen:

- 1: Pumpengehäuse
- 2: Umfangswand
- 3: erste Stirnwand
- 4: zweite Stirnwand
- 5: Förderkammer
- 6: Einlass
- 7: -
- 8: Auslass
- 9: zweiter Auslass
- 10: Rotor
- 11: Flügel
- 12: Antriebswelle
- 13: weibliches Fügeelement
- 14: Hohlraum
- 15: männliches Fügeelement
- 16: Lasche
- 17: Feder

- 50: Dichtungslage
- 51: Dichtungsschleife
- 52: Innenbereich
- 53: Durchgänge
- 54: Versteifungsstruktur

- S: Dichtung
- R: Drehachse

## Patentansprüche

1. Pumpe zur Beaufschlagung eines Aggregats, beispielsweise eines Getriebes, mit Fluid, die Pumpe umfassend:
1.1 ein Pumpengehäuse (1) mit
- einem Einlass (6) für das Fluid auf einer Niederdruckseite,
- einem Auslass (8) für das Fluid auf einer Hochdruckseite,
- einer Umfangswand (2), die eine Förderkammer (5) der Pumpe umgibt, und
- einer Stirnwand (3) mit einer der Förderkammer (5) axial abgewandten äußeren Stirnfläche, an welcher der Auslass (8) mündet,
1.2 ein in der Förderkammer (5) bewegliches Förderglied zur Förderung des Fluids von der Niederdruckseite zur Hochdruckseite,
1.3 eine Dichtung (S) mit einer Dichtungsschleife (51), die den Auslass (8) zur Abdichtung an der äußeren Stirnfläche der Stirnwand (3) umgibt,
1.4 ein weibliches Fügeelement (13; 23; 33; 43) mit einem axial erstreckten Hohlraum (14; 24; 34; 44), und
1.5 ein männliches Fügeelement (15; 25; 35; 45), das eines aus Pumpengehäuse (1) und Dichtung (S) durchragt oder von einem aus Pumpengehäuse (1) und Dichtung (S) vorragt,
1.6 wobei das männliche Fügeelement (15; 25; 35; 45) im Hohlraum (14; 24; 34; 44) mit dem weiblichen Fügeelement (13; 23; 33; 43) in einem axial auf Zug belastbaren Fügeeingriff ist, und
1.7 wobei die Dichtung (S) an einer vom Pumpengehäuse (1) axial abgewandten Rückseite axialen Kontakt mit einem der Fügeelemente (13, 15; 43, 45) hat und dadurch am Pumpengehäuse (1) gehalten wird und/oder
1.8 das weibliche Fügelement (23; 33; 43) auf das männliche Fügeelement (25; 35; 45) geschraubt oder gesteckt ist.

2. Pumpe nach dem vorhergehenden Anspruch, wobei das männliche Fügeelement (15; 25; 35; 45) den Hohlraum (14; 24; 34; 44) verschließt.

3. Pumpe nach einem der vorhergehenden Ansprüche, wobei der Hohlraum (14; 24; 44) ein Sackloch ist.

4. Pumpe nach einem der vorhergehenden Ansprüche, wobei sich eines der Fügeelemente (13; 43) mit der Rückseite der Dichtung (S) in axialem Kontakt befindet und die Dichtung (S) axial gegen das Pumpengehäuse (1) drückt.

5. Pumpe nach einem der vorhergehenden Ansprüche, wobei das männliche Fügeelement (15; 35; 45) eine Schraube, ein Gewindestift, ein Blindniet oder ein Pressbolzen oder Pressstift ist.

6. Pumpe nach einem der vorhergehenden Ansprüche, wobei das männliche Fügeelement (15) einen Schaft und einen Kopf aufweist, der Schaft einen Durchgang der Dichtung (S) axial durchragt und in den Hohlraum (14) ragt und das männliche Fügeelement (15) mit dem Kopf axial gegen die Dichtung (S) und die Dichtung (S) dadurch gegen das Pumpengehäuse (1) drückt.

7. Pumpe nach einem der vorhergehenden Ansprüche, wobei der Hohlraum (14; 44) ein Innengewinde, vorzugsweise ein metrisches Innengewinde kleiner M5 , aufweist und die Fügeelemente (13, 15; 43, 45) im Hohlraum (14; 44) in einem Schraubeingriff sind.

8. Pumpe nach einem der vorhergehenden Ansprüche, wobei an einem Außenumfang der Dichtung (S) wenigstens eine Lasche (16) nach außen vorragt und das männliche Fügeelement (15; 45), vorzugsweise mit dem Schaft nach Anspruch 6, die Lasche (16) durchragt.

9. Pumpe nach einem der vorhergehenden Ansprüche, wobei das weibliche Fügeelement (13; 23) Bestandteil des Pumpengehäuses (1) ist und die Umfangswand (2) und die Stirnwand (3) relativ zueinander in Bezug auf die Drehwinkelposition positioniert, wobei der Hohlraum (14; 24) an einer der Dichtung (S) zugewandten Stirnseite des weiblichen Fügeelements (13; 23) vorgesehen ist.

10. Pumpe nach einem der vorhergehenden Ansprüche, wobei das weibliche Fügeelement (13) durch einen Normstift mit Innengewinde, vorzugsweise nach DIN EN ISO 8735 oder DIN EN ISO 8733 in der am Tag der Anmeldung geltenden Fassung, gebildet wird.

11. Pumpe zur Beaufschlagung eines Aggregats, beispielsweise eines Getriebes, mit Fluid, die Pumpe umfassend:
11.1 ein Pumpengehäuse (1) mit
- einem Einlass (6) für das Fluid auf einer Niederdruckseite,
- einem Auslass (8) für das Fluid auf einer Hochdruckseite,
- einer Umfangswand (2), die eine Förderkammer (5) der Pumpe umgibt, und
- einer Stirnwand (3) mit einer der Förderkammer (5) axial abgewandten äußeren Stirnfläche, an welcher der Auslass (8) mündet,
11.2 ein in der Förderkammer (5) bewegliches Förderglied zur Förderung des Fluids von der Niederdruckseite zur Hochdruckseite,
11.3 eine in axialer Richtung federelastische Feder (17), die den Auslass (8) an der äußeren Stirnfläche der Stirnwand (3) umgibt, und
11.4 eine Dichtung (S) mit einer Dichtungsschleife (51), die den Auslass (8) zur Abdichtung an der äußeren Stirnfläche der Stirnwand (3) umgibt,
11.5 wobei die Dichtung (S) mittels Fügeverbindung und die Feder (17) mittels der Dichtung (S) am Pumpengehäuse (1) gehalten werden.

12. Pumpe nach dem vorhergehenden Anspruch, wobei die Feder (17) in axialer Richtung zwischen der Stirnwand (3) und der Dichtung (S) angeordnet ist und die Dichtung (S) die Feder (17) in axialer Sicht auf die Stirnwand (3) überlappt.

13. Pumpe nach einem der zwei vorhergehenden Ansprüche, wobei an einem Außenumfang der Dichtung (S) wenigstens eine Lasche (16) nach außen vorragt und die Lasche (16) die Feder (17) in axialer Sicht auf die Stirnwand (3) überlappt.

14. Pumpe nach einem der drei vorhergehenden Ansprüche, wobei die Feder (17) durch eine Tellerfeder gebildet wird.

15. Pumpe nach einem der vier vorhergehenden Ansprüche, wobei die Fügeverbindung nach einem der Ansprüche 1 bis 10 gebildet ist.
